# EUROPEAN PATENT APPLICATION

(11) **EP 2 889 823 A1**
(43) Date of publication of application: **01.07.2015**
(21) Application number: 13306901.3
(22) Date of filing: 31.12.2013
(51) Int. Cl.: G06Q 20/32, G06Q 20/34, G06Q 20/40

(54) **Method for securing a completion step of an online transaction**

(71) Applicant: Gemalto SA, 92190 Meudon (FR)
(72) Inventor: Valmores, Keith Lawrence, 92190 Meudon (FR)
(74) Representative: Lotaut, Yacine Diaw

(57) **Abstract**

The present invention relates to a method (METH) for securing a completion step of an online transaction between a merchant (MS) and a contactless card (CRD) of a cardholder (USR) through a user mobile device (MD) acting as a contactless reader connected to a network, wherein during said completion step:
- establishing (4) a Near Field Communication (NFC) connection (PPL) between the contactless card (CRD) and the mobile device (MD), the contactless card (CRD) being able to store user's sensitive data,
- transmitting (8, 10), from the contactless card (CRD) to the mobile device (MD), transaction data (PCD, CTF) through the connection (PPL), the transaction data (PCD, CTF) being encapsulated in a message (MSG) according to NFC protocol, the transaction data (PCD, CTF) comprising user's sensitive data relevant to determining if the online transaction should be granted,
- sending of the encapsulated transaction data (PCD, CTF) from the contactless device (MD) to the network for completion of the online transaction.

## Description

### FIELD OF THE INVENTION

The invention relates to a method for securing a completion step of an online transaction, for example a transaction according to the EMV standard.

### BACKGROUND

Well known payment cards are used by millions of people worldwide to facilitate various types of commercial transactions. In a typical transaction involving the purchase of a product or service at a merchant location, the payment card is presented at a point of sale terminal ("POS terminal") located at a merchant's place of business. The POS terminal may be a card reader or similar device that is capable of accessing data stored on the payment card, where this data includes identification and authentication data. Data read from the payment card is provided to the merchant's transaction processing system and then to the acquirer, which is typically a bank or other institution that manages the merchant's account.

To ensure the security and global interoperability of chip based payment cards, it is well known EMV standards which define the interaction between EMV-compliant payment cards and EMV-compliant POS terminals. Therefore to accept EMV payments, merchants have to deploy EMV-compliant POS terminals. Such EMV-compliant POS terminals hardware, their deployment and their maintenance are considerable costs for the merchants.

Although this existing payment instruments function well, mainly due to the fact that the card associations have been protecting the consumers by passing on losses to merchants and banks, it is clear that banks, merchants and consumers desire a simple, secure method to conduct online financial transactions.

Today, technology has revolutionized the way that consumers make purchases and expanded the range of retail channels. Indeed, mobile devices, such as mobile phones, play an increasingly versatile role in daily life. Many new features and services are being developed in an attempt to expand mobile phones beyond their traditional role of voice and message transmission.

Mechanisms for users to perform transactions are evolving with today's technology. Such mechanisms include Bluetooth communication, Near Field Communication (NFC), Quick Response (QR) code scanning, Wi-Fi communication, and the like.

In the case where the payment experience is automated by a facility with Near Field Communication (NFC), the facility must have a NFC-compatible payment terminal, which is inconvenient for the facility because of the hardware, software, and support expense associated with having NFC-enabled devices on site.

In the case of an online transaction, a majority of e-commerce and m-commerce sites on the internet use ad hoc payment methods. For example, if a person wants to purchase coffee online, that person has to enter his personal and financial information on websites. The user has few or no means to check whether the communications between device inputs and the merchant are intercepted and whether the transaction data is tampered with before to be received by the merchant.

As the mobile computing capabilities and development of robust wireless network infrastructure merge, it is clear that there is an increasing desire for faster, cheaper, secure and more convenient payment systems to conduct financial transactions which can be compliant with standard protocols such as EMV standard.

### SUMMARY

The present invention addresses the aforementioned drawbacks. The present invention relates to a method for securing remote payment transactions in a mobile device comprising a contactless interface.

According to the present invention, there is provided a method for allowing a secure financial transaction to be completed thanks to a NFC-enabled mobile device, preferably a personal mobile device of a user, which is used as a NFC POS terminal. During a completion step of the transaction, transaction data exchanged between a user contactless card and the NFC-enabled mobile device behaving like a reader is encapsulated inside messages according to the NFC data exchange (NDEF) protocol. With the present invention, the transaction is completed without revealing the user's financial details and/or other personal details to that NFC-enabled mobile device. Transaction data is communicated from the contactless card to the contactless device over a contactless communications channel.

The data exchanged in this specification are directed towards the EMV transaction process by knowing that it can be any suitable transaction standard.

Thus, the invention aims at providing a method for carrying out an online transaction between a merchant and a cardholder, in a secure way, without the cardholder having to be physically present in the merchant place, and without the cardholder having to key in the card numbers.

Aspects of the embodiments of the present invention relate in general to method for securing a completion step of an online transaction between a merchant and a contactless card of a cardholder through a user mobile device acting as a contactless reader connected to a network, wherein during said completion step:
- establishing a Near Field Communication (NFC) connection between the contactless card and the mobile device, the contactless card being able to store user's sensitive data,
- transmitting, from the contactless card to the mobile device, transaction data through the connection, the transaction data being encapsulated in a message according to NFC protocol, the transaction data comprising user's sensitive data relevant to determining if the online transaction should be granted,
- sending of the encapsulated transaction data from the contactless device to the network for completion of the online transaction.

By using his NFC-enabled mobile device as a reader for his contactless smart card, the cardholder is able to carry out remotely online transactions (for example while moving or from his place), with the use of already deployed cards. Besides, the cardholder does not have to key in the numbers of his card because card authentication data are automatically sent from the card to the mobile device. Moreover, the online transaction is secured.

A transaction is said online when a reader terminal connects to an acquirer to process a card transaction and request an authorization. This may happen, for example, if the chip based on the card requests the terminal to process that way, or if the transaction value is above a merchant's agreed floor limit.

The contactless smart card is preferably an EMV chip-based card which is NFC-enabled. A chip-based smart card is for example a loyalty card, a debit card or a credit card. The messages according to NFC protocol are called NDEF messages.

According to not limited embodiments, the method can comprise one or more of the following additional characteristics.

In a not limited embodiment, the transaction data comprise a PIN code used for a cardholder verification step of the transaction. Thus, the transmission of the PIN code used for the cardholder verification step is secured.

In a not limited embodiment, the method comprises requesting said PIN code by the mobile device, and said request in encapsulated in at least a message according to NFC protocol. Thus, the entire cardholder verification step is secured.

In a not limited embodiment, the transaction data comprise a certificate used for a card authentication step of the transaction. Thus, the transmission of the certificate used for the card authentication step is secured.

In a not limited embodiment, the method comprises downloading said certificate to a SIM card of the mobile device. This allows secured online authentication.

In a not limited embodiment, the method comprises requesting said certificate by the mobile device, and said request is encapsulated in at least a message according to NFC protocol. This allows secured offline authentication.

In a not limited embodiment, the method comprises receiving by the mobile device synchronisation codes with a server. This allows finalizing the online transaction.

In a not limited embodiment, the synchronisation codes are received by SMS.

### BRIEF DESCRIPTION OF THE DRAWINGS

Some embodiments of apparatus and/or methods in accordance with embodiments of the present invention are now described, by way of example only, and with reference to the accompanying drawings, in which:
- figure 1 shows a contactless smart card and a NFC-enabled mobile device while carrying out an outline EMV transaction according to a not limited embodiment of the invention;
- figure 2 shows steps of the method according to a not limited embodiment.

### DETAILED DESCRIPTION OF A NOT LIMITED EMBODIMENT

In the following description, well-known functions or constructions by the man skilled in the art are not described in detail since they would obscure the invention in unnecessary detail.

The invention provides a method METH for securing a completion step of an online transaction, which is an EMV transaction in the described embodiment.

The features defined by EMV comprise in particular:
- Authentication of the chip card to verify that the card is genuine so as to protect against counterfeit fraud for both online authorized transactions and offline transactions. Card authentication is either realized online by the issuer using a dynamic cryptogram, or offline using for example Static Data authentication (SDA) or Dynamic Data Authentication (DDA).
- Digitally signing payment data for transaction integrity.
- Cardholder verification to protect against lost and stolen card fraud. Methods for cardholder verification include online PIN or offline PIN. Online PIN involves encrypting the PIN and sending it back to the issuer for checking; offline PIN involves checking the PIN against a copy stored securely on the card itself.

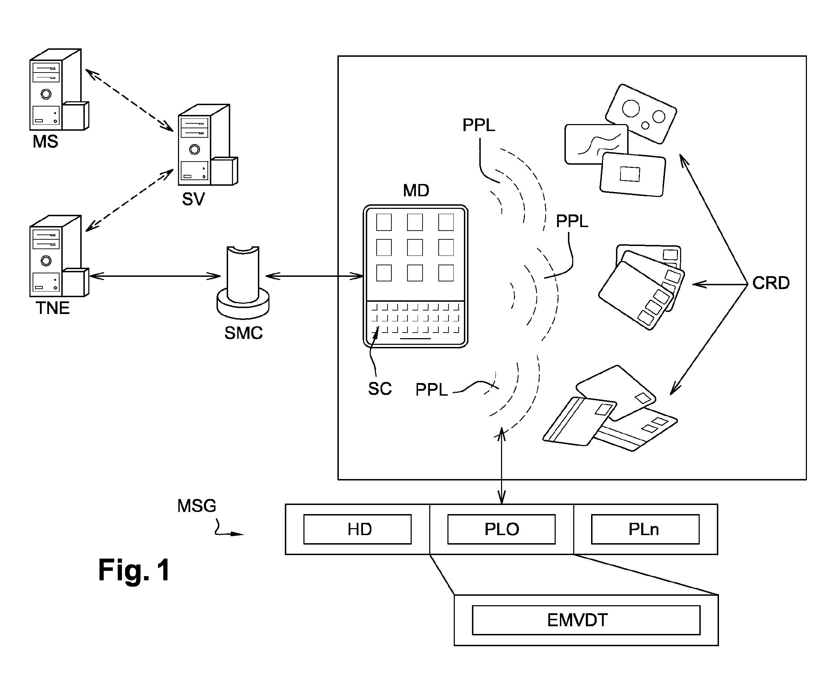

In reference with figure 1, elements involved for processing the method include:
- a NFC-enabled mobile device MD, such as a Smartphone, that is to say a mobile device comprising a NFC chip and a SIM card SC.
- a contactless smart card CRD, for example a loyalty card, a debit card or a credit card, which is NFC-enabled. The smart card CRD and the mobile device MD are able to communicate via a Peer-to-Peer NFC link PPL.
- a short message service center SMC, able to deliver SMS messages to the mobile device MD, in particular a SMS message comprising synchronisation codes COD with an EMV server.
- a trusted entity, such as a bank or a credit card company, for example Visa or MasterCard, related to the smart card CRD, comprising an EMV server SV able to synchronize with the mobile device MD so as to authorize or deny a transaction.
- a telecommunication networking equipment TNE for linking the EMV server SV and the short message service center SMC.
- a merchant site MS the mobile device MD needs to carry out a transaction with.

Near Field Communication (NFC) is a short-range wireless technology that enables communication between two devices over a distance of less than 10 cm. A NFC connection is established by getting close these two devices; this operation is commonly called a "tap".

Using NFC, data can be exchanged by two inductively coupled coils - one per device - generating a magnetic field with a frequency of 13.56 MHz. The field is modulated to facilitate data transfers. During the communication, one device acts as the initiator (starting the communication) whereas the other device operates in target mode (waiting for the initiator). Thus not more than two devices can be evolved in the communication.

NFC distinguishes two operation modes for communication: passive and active mode. In passive mode, only the device starting the communication (the initiator) produces the 13.56 MHz carrier field. A target introduced to this field may use it to draw energy but must not generate a carrier field at its own. The initiator transfers data by directly modulating the field, the target by load-modulating it. This mode enables NFC-devices to communicate with existing contactless smart cards. The term load modulation describes the influence of load changes on the initiator's carrier field's amplitude. These changes can be perceived as information by the initiator.

In active mode, both devices generate an RF field. Each side transmits data by modifying its own field, using an Amplitude Shift Keying (ASK) modulation scheme. Advantages compared to passive mode are a larger operating distance (up to 20 cm) and higher transmission speeds. To avoid collisions, only the sending device emits an electromagnetic field; the receiving entity switches off its field while listening. If necessary these roles can change as often as needed.

Moreover, an NFC-enabled device offers the following modes of communication:
- Reader/Writer Mode: In Reader/Writer mode, an NFC-enabled device acts as an ordinary reader for contactless smart cards. This mode causes the NFC-enabled device to act as an active device. Operating in this mode, the NFC-enabled device can read and alter data stored in NFC compliant passive (without battery) transponders. Such tags can be found on for example Smart Posters allowing the cardholder to retrieve additional information by reading the tag with an NFC-enabled device. Depending on the data stored on the tag, the NFC-enabled device takes an appropriate action without any cardholder interaction. For example, if an URI was found on the tag, the NFC-enabled device would open a web browser.
- Card Emulation Mode: Tag emulation mode is the reverse of the reader/writer mode: a contactless token is emulated. In this mode, the NFC-enabled device acts solely in passive mode. Due to the fact that the card is only emulated, it is possible to use one NFC-enabled device to act on behalf of several "real" smart cards. Which card is presented to the reader depends on the situation and can be influenced by software. This mode is for example useful for contactless payment and ticketing applications.
- Peer-to-Peer Mode: After having established a link between two participants, a transparent protocol for data exchange can be started. Main purpose of this protocol is to enable the cardholder to send his own data as soon as possible (i.e. after a few milliseconds). In a peer-to-peer session, either both initiator and target can be in active mode, or initiator in active and target in passive mode. This helps the target to reduce its energy consumption and is therefore especially useful if the initiator is a stationary terminal (for example a ticket counter) and the target a mobile device (for example a mobile phone). The NFC peer-to-peer mode (ISO 18092) allows two NFC-enabled devices to establish a bidirectional connection to exchange contacts, Bluetooth pairing information or any other kind of data. To establish a connection, a client (NFC peer-to-peer initiator) is searching for a host (NFC peer-to-peer target) to setup a connection. Then the Near Field Communication Data Exchange Format (NDEF) is used to transmit the data.

The NFC Data Exchange Format (NDEF) is a standardized data format that can be used to exchange information between any compatible NFC-enabled device and another NFC-enabled device or tag. In particular, NDEF can be used to exchange data between two active NFC-enabled devices in "peer-to-peer" mode. The NDEF specification defines a message encapsulation format to exchange information. An NDEF message is composed of one or more NDEF records. NDEF Records contain a specific payload, and have a structure that identifies the type and length of the record.

Thus, when a Peer-to-Peer connection is established between the mobile device MD and the smartcard CRD (for example after a tap, the mobile device MD acting as an NFC reader) the NDEF format is used to exchange data between these two devices in "peer-to-peer" mode. The peer-to-peer link allows transmitting NDEF messages MSG comprising NDEF records.

Each NDEF record comprises a header HD and at least a payload PLO, PLn. According to the invention, EMV transaction data are embedded in at least one of said payloads PLO.

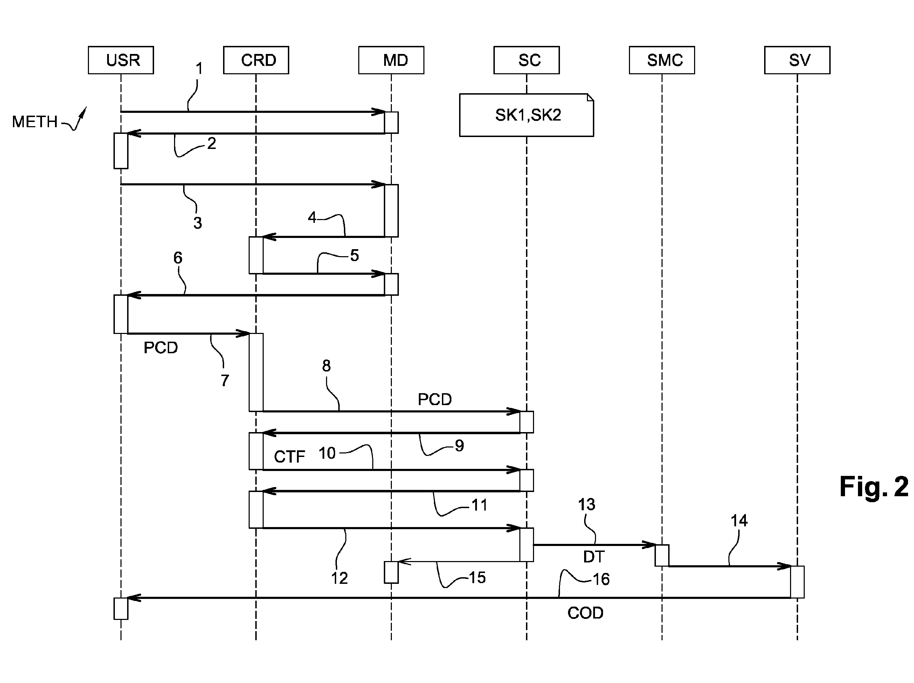

Figure 2 shows steps of a not limited embodiment of the method METH.

According to a step 1, the mobile device MD is started as a reader by an cardholder USR. Security keys SK1, SK2 related to the smart card CRD, and useful for processing an EMV transaction, are provisioned in the SIM card SC of the mobile device MD. In the described embodiment, a first security key SK1 is used for verification of the cardolder USR identity, and a second security key SK2 is used for authentication of the smart cart CRD.

According to a step 2, the mobile device MD displays a request for type of transaction the cardholder USR would like to carry out, and potentially for some other details about the transaction, for example an amount if the transaction is for paying via the merchant site MS.

According to a step 3, the cardholder USR taps the smart card SC on the mobile device MD (tapping operation is bringing the smart card SC close to the mobile device MD, typically less than ten centimeters), and selects a transaction. Said selection is analyzed by the mobile device MD. Then, the NFC Logical Link Control Protocol (LLCP) is followed. The NFC LLCP specifies link activation, supervision of the connection, and deactivation of the link for Peer-to-Peer NFC connections.

According to a step 4, the mobile device MD establishes a secured Peer-to-Peer connection between itself and the smart cart CRD, according to the NFC LLCP.

According to a step 5, the smart card CRD informs the mobile device MD the cardholder USR identity has to be verified, according to the EMV transaction specifications.

According to a step 6, in response to the step 5, the mobile device MD displays a request for cardholder verification, asking for a PIN code PCD associated to the smart card CRD.

According to a step 7, the cardholder USR keys in his PIN code PCD in a keyboard of the smart cart CRD. It should be noted that in another embodiment, the PIN code PCD of the smart card CRD is entered directly on the screen of the mobile device MD in order to process the cardholder verification.

According to a step 8, the PIN code PCD is checked by means of the first security key SK1 provisioned in the SIM card SC of the mobile device MD. Thus, the cardholder identity is verified. According to the invention, data transiting during steps 6, 7 and 8 (in particular the PIN code PCD) are encrypted and encapsulated inside NDEF messages according to the NFC Simple NDEF Exchange Protocol (SNEP).

According to a step 9, the SIM card SC requests a certificate CTF for the card authentication step of the EMV transaction flow, to the smart card CRD. This allows an online card authentication. In another embodiment, offline authentication is realized: the certificate CTF is directly downloaded from the smart card CRD to the SIM card SC.

According to a step 10, said certificate CTF is sent from the smart cart CRD to the SIM card SC of the mobile device MD. Then, the certificate CTF is checked by means of the second security key SK2 provisioned in the SIM card SC of the mobile device MD. Thus, the card CRD is authenticated. According to the invention, data transiting during steps 9 and 10 (in particular the certificate CTF) are encrypted and encapsulated inside NDEF messages according to the NFC Simple NDEF Exchange Protocol (SNEP).

According to steps 11 and 12, GP or GOP data packet exchanges between the smart cart CRD and the SIM card CR are realized.

According to a step 13, once the cardholder has been verified and the card has been authenticated, the SIM card SC sends EMV transaction data DT according to the GSM 03.48 format to the short message service center SMC.

According to a step 14, said short message service center SMC transmits the EMV transaction data to the EMV server SV, via the telecommunication networking equipment TNE.

According to a step 15, the SIM card SC ends the Peer-to-Peer session.

According to a step 16, the EMV server SV analyzes the EMV transaction data DT and makes the decision of granting of denying the transaction. As a result, a transaction response is sent from the EMV server SV to the mobile device MD which displays said response for the cardholder USR. After the transaction, an audit report is then sent via SMS to the mobile device MD with the necessary synchronization codes COD necessary for synchronizing with the EMV server SV.

Thus, the method according to the invention extends NFC-enabled devices functionalities by making said devices as readers for smart cards. By tapping the smart card to a NFC-enabled device acting as an NFC reader the customer can carrying out online EMV transactions. Communication between the NFC-enabled device and the smart card relies on the NFC P2P protocol by embedding the EMV transaction data in NDEF messages. All EMV transaction data exchanged (following the standard EMV flow defined in its specifications) are encapsulated in NDEF packets.

## Claims

1. Method (METH) for securing a completion step of an online transaction between a merchant (MS) and a contactless card (CRD) of a cardholder (USR) through a user mobile device (MD) acting as a contactless reader connected to a network, wherein during said completion step:
- establishing (4) a Near Field Communication (NFC) connection (PPL) between the contactless card (CRD) and the mobile device (MD), the contactless card (CRD) being able to store user's sensitive data,
- transmitting (8, 10), from the contactless card (CRD) to the mobile device (MD), transaction data (PCD, CTF) through the connection (PPL), the transaction data (PCD, CTF) being encapsulated in a message (MSG) according to NFC protocol, the transaction data (PCD, CTF) comprising user's sensitive data relevant to determining if the online transaction should be granted,
- sending of the encapsulated transaction data (PCD, CTF) from the contactless device (MD) to the network for completion of the online transaction.

2. Method (METH) according to the previous claim, wherein the transaction data (PCD, CTF) comprise a PIN code (PCD) used for a cardholder (USR) verification step of the transaction.

3. Method (METH) according to the previous claim, comprising requesting (6) said PIN code (PCD) by the mobile device (MD), and said request in encapsulated in a message (MSG) according to NFC protocol.

4. Method (METH) according to any of the previous claims, wherein the transaction data (PCD, CTF) comprise a certificate (CTF) used for a card (CRD) authentication step of the transaction.

5. Method (METH) according to the previous claim, comprising downloading (10) said certificate (CTF) to a SIM card (SC) of the mobile device (MD).

6. Method (METH) according to claim 4 or claim 5, comprising requesting (9) said certificate (CTF) by the mobile device (MD), and said request is encapsulated in a message (MSG) according to NFC protocol.

7. Method (METH) according to any of the previous claims, comprising receiving (16) by the mobile device (MD) synchronisation codes (COD) with a server (SV).

8. Method (METH) according to the previous claim, wherein the synchronisation codes (COD) are received by SMS.
